# FASCICULE DE BREVET EUROPEEN

(11) **EP 1 057 705 B1**
(45) Date de publication et mention de la délivrance du brevet: **28.07.2004**
(21) Numéro de dépôt: 00401454.4
(22) Date de dépôt: 25.05.2000
(51) Int. Cl.: B61D 17/04, B62D 33/04

(54) **Caisse de véhicule ferroviaire, véhicule ferroviaire et procédés d'assemblage correspondants**
Wagenkasten eines Schienenfahrzeuges, Schienenfahrzeug und zugehörige Verfahren zur Herstellung
Body of a railway vehicle, railway vehicle and related methods of assembly

(30) Priorité: 03.06.1999 FR 9907014
(43) Date de publication de la demande: 06.12.2000
(73) Titulaire: Alstom, 75116 Paris (FR)
(72) Inventeur: Campus, Emigliano, 17340 Yves (FR); Dastas, Laurent, 17000 La Rochelle (FR)
(74) Mandataire: de Lambilly Delorme, Marie Pierre

(56) Documents cités:
- EP-A- 0 780 279
- DE-A- 1 950 086
- GB-A- 2 147 680
- US-A- 3 021 159

## Description

La présente invention concerne une structure de caisse de véhicule ferroviaire du type structure maillée, comportant des éléments longitudinaux et transversaux se rejoignant au niveau de noeuds, un habillage extérieur et un habillage intérieur supportés par la structure maillée.

En général les éléments longitudinaux et transversaux des structures maillées des caisses du type précité sont des profilés en U ou en Ω.

Pour assembler ces profilés au niveau des noeuds de la structure maillée, il est généralement nécessaire de les découper.

Les noeuds des structures maillées de caisses de modèles différents sont disposés en des emplacements différents en fonction, notamment, du nombre et des positions des fenêtres des caisses.

On connaît également des structures triangulées comme dans le document EP 780 279, où la structure est constituée de longerons inférieur et supérieurs reliés par des barres reliées dans des noeuds d'assemblage.

Ainsi, une étude de conception complète et des nouveaux plans sont nécessaires pour chaque modèle de caisse de véhicule.

Par ailleurs, les temps et les coûts d'assemblage de telles structures de caisses sont relativement élevés notamment en raison d'une part de l'impossibilité de recourir au cintrage automatisé pour les profilés transversaux qui doivent être cintrés au galbe de la caisse à obtenir, et d'autre part de la complexité de l'assemblage des profilés au niveau des noeuds de la structure.

L'invention a pour but de résoudre ces problèmes en fournissant une structure de caisse de véhicule ferroviaire du type précité, dont la durée et les coûts de fabrication sont réduits, et dont le principe de conception peut être utilisé pour des caisses de dimensions et/ou de formes différentes en limitant ainsi les coûts d'études spécifiques à chaque type de caisse.

A cet effet, l'invention à pour objet une structure de caisse de véhicule ferroviaire, selon la revendication 1, destinée à surmonter un châssis, du type précité, des éléments de la structure maillée sont des tubes de sections circulaires, la structure maillée comprend, au niveau d'au moins certains de ses noeuds, des raccords de tubes longitudinaux et transversaux de sections circulaires, ces raccords comprennent des manchons de sections circulaires longitudinaux et transversaux qui reçoivent respectivement des tubes, et caractérisée en ce qu'elle comprend des tubes longitudinaux et transversaux et que des tubes longitudinaux traversent de part en part lesdits raccords de tubes longitudinaux et transversaux.

Selon des modes particuliers de réalisation, la structure de caisse de véhicule ferroviaire peut comprendre l'une ou plusieurs des caractéristiques suivantes, prises chacune en combinaisons avec les caractéristiques de la revendication 1 :
- la structure maillée comprend des arceaux transversaux formés à partir de tubes transversaux de sections circulaires ;
- lesdits arceaux transversaux comprennent chacun un tube central de section circulaire cintré et disposé dans une région de pavillon de la caisse, des tubes de sections circulaires cintrés plus fortement que ledit tube central et prolongeant ce dernier latéralement de part et d'autre dans des régions de battants de pavillon de la caisse, et des tubes de sections circulaires prolongeant les tubes des régions de battants de pavillon dans des régions de parois latérales ;
- chacun desdits arceaux transversaux comprend des raccords de tubes transversaux qui participent à la liaison entre le tube central de la région de pavillon et les tubes des régions de parois latérales, et ces raccords de tubes transversaux comprennent des manchons transversaux de sections circulaires qui reçoivent lesdits tubes des régions de pavillon et de parois latérales ;
- lesdits raccords des arceaux transversaux sont des raccords de tubes transversaux et de tubes longitudinaux, et ces raccords comprennent des manchons longitudinaux de sections circulaires qui reçoivent des tubes longitudinaux qui traversent de part en part lesdits raccords ;
- la structure comprend des goussets de soudage présentant des semelles d'appui orientées vers l'extérieur de la caisse et sur lesquelles l'habillage extérieur est soudé ;
- des goussets de soudage sont portés par des tubes de sections circulaires de la structure maillée ;
- des goussets de soudage sont fixés sur des raccords de tubes de sections circulaires de la stucture maillée ;
- l'habillage extérieur est au moins partiellement collé sur la structure maillée ;
- l'habillage extérieur est collé directement sur des éléments longitudinaux et/ou transversaux de la structure maillée ;
- l'habillage intérieur est fixé par enclenchement élastique sur des tubes de sections circulaires de ladite structure.

L'invention a aussi pour objet un véhicule ferroviaire comprenant un châssis et une structure de caisse surmontant le châssis, caractérisé en ce que la structure de caisse est une structure telle que définie ci-dessus.

L'invention a également pour objet un procédé d'assemblage d'une structure de caisse, selon la revendication 13, caractérisé en ce que, pour former ladite structure maillée, on insère des tubes longitudinaux dans les manchons longitudinaux desdits raccords de tubes longitudinaux et transversaux, on fait coulisser ces raccords jusqu'à des emplacements de noeuds de la structure, et on fixe ces raccords sur les tubes longitudinaux au niveau de ces emplacements.

Selon des modes particuliers de réalisation, le procédé d'assemblage peut comprendre l'une ou plusieurs des caractéristiques suivantes, prises chacune en combinaison avec les caractéritiques de la revendication 13 :
- on assemble des tubes transversaux aux manchons transversaux d'au moins certains desdits raccords de tubes longitudinaux et transversaux avant de fixer ces raccords auxdits emplacements de noeuds de la structure maillée ;
- on assemble des tubes transversaux de sections circulaires pour former des arceaux transversaux de la structure maillée ;
- on assemble, pour former chacun desdits arceaux transversaux, un tube central de section circulaire cintré et destiné à être disposé dans une région de pavillon de la caisse, des tubes de sections circulaires cintrés plus fortement que ledit tube central et destinés à être disposés dans des régions de battants de pavillon de la caisse, et des tubes de sections circulaires destinés à prolonger les tubes des régions de battants de pavillon dans des régions de parois latérales de la caisse ;
- on relie, pour chacun desdits arceaux transversaux, le tube central de la région de pavillon et les tubes des régions de parois latérales par l'intermédiaire de raccords de tubes transversaux qui comprennent des manchons transversaux de sections circulaires qui reçoivent lesdits tubes des régions de pavillon et de parois latérales ;
- lesdits raccords des arceaux transversaux sont des raccords de tubes transversaux et de tubes longitudinaux qui comprennent des manchons longitudinaux de sections circulaires, pour former ladite structure maillée, on insère des tubes longitudinaux dans les manchons longitudinaux desdits raccords des arceaux transversaux, on fait coulisser ces raccords jusqu'à des emplacements de noeuds de la structure, et on fixe ces raccords au niveau de ces emplacements ;
- on assemble des tubes transversaux d'arceaux transversaux aux manchons transversaux d'au moins certains desdits raccords de tubes longitudinaux et transversaux d'arceaux transversaux avant de fixer ces raccords auxdits emplacements de noeuds de la structure maillée ;
- on fixe des goussets de soudage sur la structure maillée en orientant des semelles d'appui de ces goussets vers l'extérieur de la caisse, puis on soude l'habillage extérieur de la caisse sur lesdites semelles ;
- on fixe des goussets de soudage sur des raccords de tubes de la structure maillée ;
- on colle au moins partiellement l'habillage extérieur sur la structure maillée ;
- on colle directement l'habillage extérieur sur des éléments longitudinaux et/ou transversaux de la structure maillée ;
- on assemble l'habillage intérieur sur la structure maillée par enclenchement élastique sur des tubes de sections circulaires de ladite structure.

L'invention a en outre pour objet un procédé d'assemblage d'un véhicule tel que défini ci-dessus, caractérisé en ce qu'on assemble la structure maillée de la caisse du véhicule en utilisant un procédé tel que défini ci-dessus.

L'invention sera mieux comprise à la lecture de la description qui va suivre, donnée uniquement à titre d'exemple, et faite en se référant aux dessins annexés sur lesquels :
- la figure 1 est une vue schématique en perspective avec arrachements d'un véhicule selon l'invention,
- la figure 2 est une vue schématique en perspective de la structure maillée de la caisse du véhicule de la figure 1,
- les figures 3 et 4 sont des vues agrandies illustrant des raccords de la structure maillée de la figure 2, et
- les figures 5 et 6 sont des vues en perspective agrandies illustrant la liaison entre la structure maillée et les habillages extérieur et intérieur de la caisse de la figure 1.

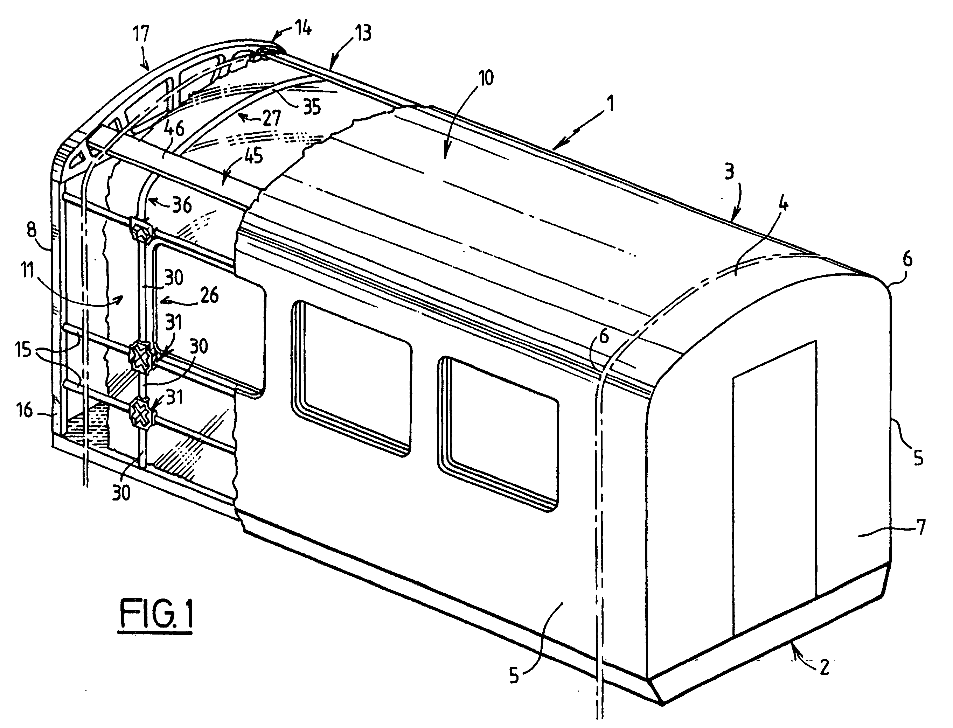

La figure 1 illustre schématiquement un véhicule ferroviaire 1 qui comprend essentiellement une caisse avec un châssis 2 surmonté d'une structure de caisse 3 fermée de section transversale en U renversé.

La structure de caisse 3, réalisée à partir d'acier noir ou inox, présente un toit ou pavillon 4, deux parois latérales 5 reliées au châssis 2, deux battants de pavillon 6 reliant chacun une paroi latérale 5 au pavillon 4, une paroi d'extrémité avant (sur la figure 1) 7 et une paroi d'extrémité arrière 8.

Seules les parties d'extrémité longitudinale et une partie centrale du véhicule 1 ont été représentées sur la figure 1 pour faciliter la représentation et la description. Pour les mêmes raisons, ce véhicule ne présente des portes qu'au niveau des parois d'extrémités avant 7 et arrière 8.

Comme on le voit grâce aux arrachements sur la figure 1, la structure de caisse 3 comprend une structure ou ossature 9 de support, un habillage extérieur 10 et un habillage intérieur 11 qui sont portés par la structure 9.

L'habillage intérieur 11 et le châssis 2 délimitent l'habitacle du véhicule ferroviaire 1.

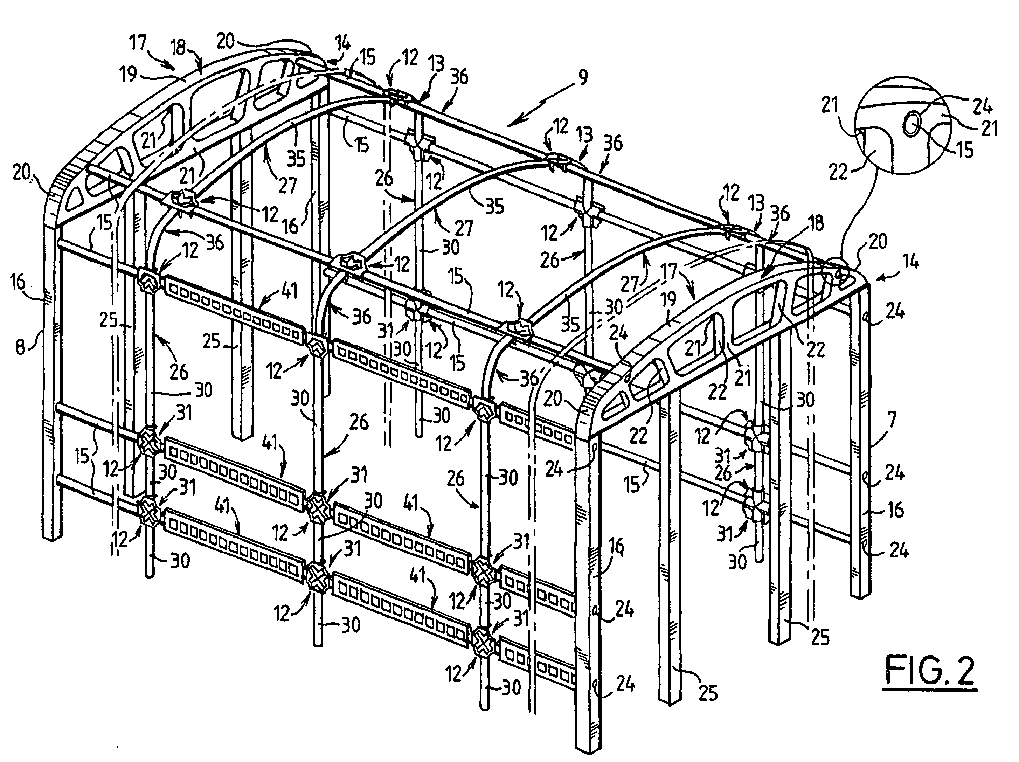

La figure 2 illustre plus particulièrement la structure 9 qui est une structure maillée, présentant des noeuds 12 formés par entrecroisement d'arceaux transversaux intermédiaires 13 et d'extrémités 14, et d'éléments longitudinaux 15 de la structure maillée 9. On notera que les proportions de cette figure 2 sont légèrement différentes de celles de la figure 1, de sorte que la partie centrale de la structure maillée 9 représentée a une longueur correspondant à la présence de deux fenêtres par paroi latérale 5 au lieu de trois fenêtres pour la figure 1.

Les éléments longitudinaux 15 sont formés par des tubes de même section circulaire qui s'étendent sur toute la longueur du véhicule 1 dans l'exemple représenté qui ne présente pas de porte latérale.

La structure maillée 9 comprend, au niveau de chaque paroi latérale 5, deux éléments longitudinaux 15, et deux éléments longitudinaux 15 au niveau de chaque battant de pavillon 6.

Les arceaux d'extrémités 14 sont disposés au niveau de l'extrémité avant 7 et au niveau de l'extrémité arrière 8 de la structure maillée 9.

Ces arceaux 14 comprennent chacun deux montants latéraux 16 et une traverse centrale supérieure 17 reliée aux extrémités supérieures des montants 16.

Les montants 16 sont des profilés de section rectangulaire sensiblement verticaux reliés par leurs extrémités inférieures au châssis 2.

La traverse centrale 17 comprend une âme supérieure 18 qui présente une région centrale 19 de courbure relativement faible correspondant à celle du pavillon 4, et deux régions latérales 20 de courbure relativement forte correspondant à celle des battants de pavillon 6.

Deux flasques ajourées 21 sont disposées longitudinalement de part et d'autre de l'âme 18 et enserrent entre eux des plaques 22 de renfort et deux manchons longitudinaux 24, comme illustré plus particulièrement par la partie cerclée agrandie de la figure 2. Ces manchons 24, de section circulaire, ont un diamètre intérieur légèrement supérieur au diamètre extérieur des éléments longitudinaux 15.

Trois manchons longitudinaux 24 analogues sont également disposés dans des évidements découpés au laser dans chaque montant 16.

Ces manchons 24 reçoivent intérieurement des extrêmités avant des éléments longitudinaux 15, pour l'arceau 14 d'extrémité avant, et des extrémités arrière des éléments longitudinaux 15, pour l'arceau 14 d'extrémité arrière.

Deux montants verticaux 25, disposés entre les montants 16, relient le châssis 2 à chaque traverse centrale 17 pour former un encadrement de porte d'extrémité longitudinale.

Les arceaux intermédiaires 13, qui sont disposés régulièrement entre les arceaux d'extrémités 14 sur toute la longueur du véhicule 1, comprennent chacun deux montants latéraux 26 sensiblement verticaux et une traverse centrale supérieure 27.

Les montants 26 comprennent chacun trois tubes 30 de même section circulaire que les éléments longitudinaux 15, à savoir deux tubes 30 de faibles longueurs et un tube 30 de plus grande longueur disposé au niveau d'une fenêtre de la paroi latérale 5 correspondante. Ces tubes 30 sont reliés entre eux et aux éléments longitudinaux 15 de la paroi latérale 5 correspondante par des raccords 31.

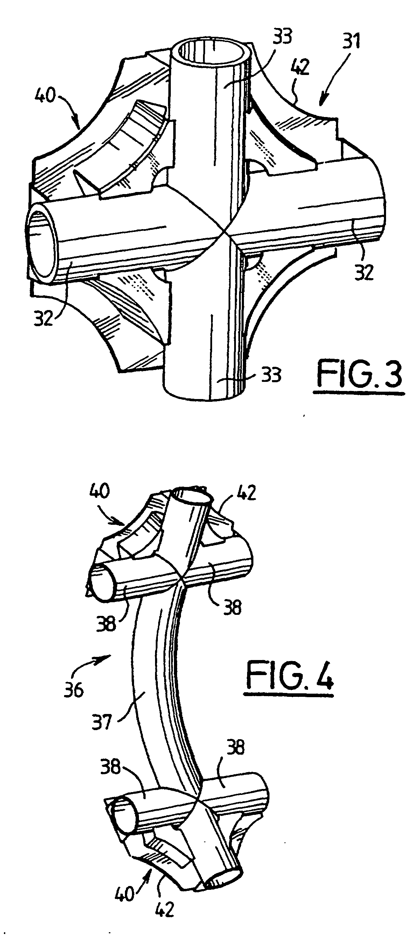

La figure 3 illustre un de ces raccords 31 qui comprend quatre manchons de même section circulaire disposés en croix, à savoir deux manchons longitudinaux 32 se prolongeant mutuellement, et deux manchons 33 transversaux qui se prolongent également mutuellement et qui sont disposés orthogonalement aux manchons longitudinaux 32. Les manchons 32 et 33 ont un diamètre intérieur légèrement supérieur au diamètre extérieur des éléments longitudinaux 15.

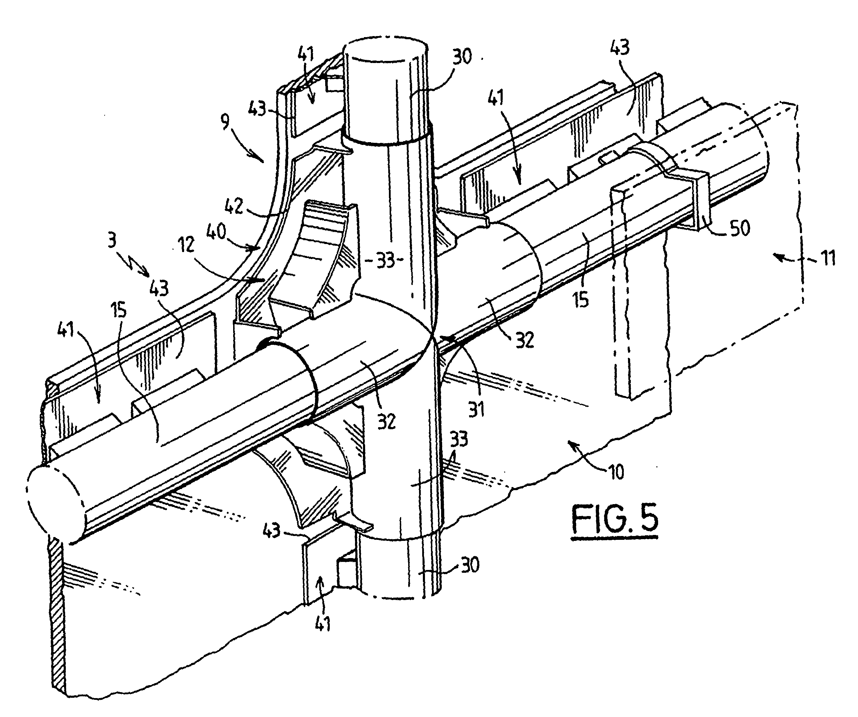

Comme illustré par les figures 2 et 5, pour chacun de ces raccords 31 un élément longitudinal 15 est inséré dans les deux manchons longitudinaux 32 en traversant le raccord 31 de part en part, et un tube vertical 30 est inséré dans chaque manchon transversal 33. Un noeud 12 de la structure maillée 9 est donc formé au niveau de chacun de ces raccords 31.

La traverse centrale supérieure 27 comprend :
- un tube central 35, de même section circulaire que les tubes 30 et que les éléments longitudinaux 15, et qui est cintré relativement faiblement de manière correspondante à ia courbure du pavillon 4, ei
- deux raccords 36 disposés de part et d'autre du tube central 35.

Comme représenté sur la figure 4, chaque raccord 36 comprend un manchon transversal 37 cintré avec une courbure relativement forte correspondant à celle des battants de pavillon 6, et quatre manchons longitudinaux 38, orthogonaux au manchon transversal 37, et alignés par paires au voisinage de chaque extrémité du manchon transversal 37.

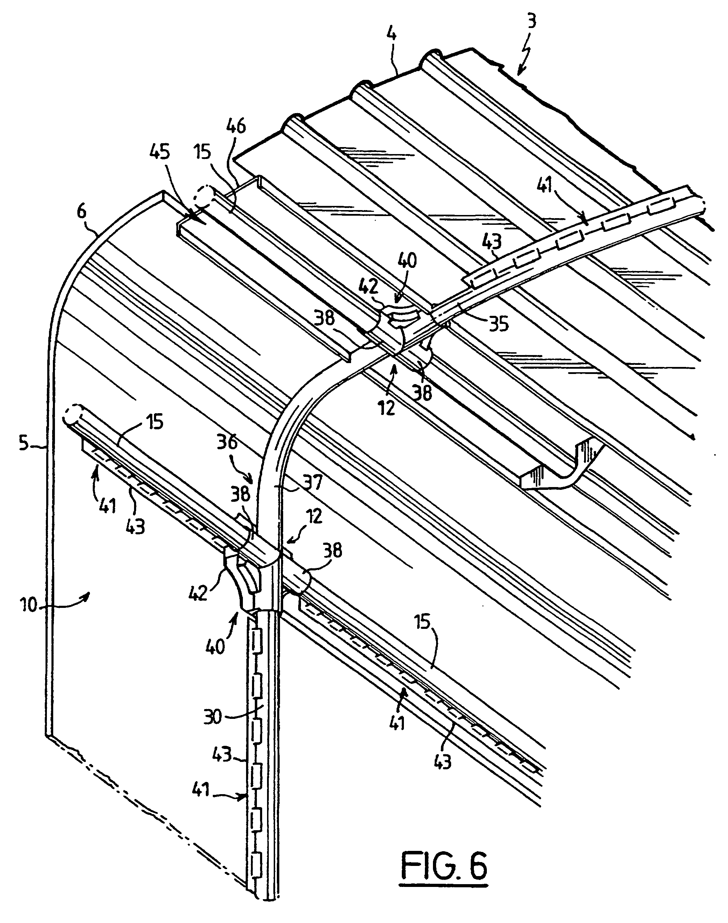

Comme illustré par les figures 2 et 6, pour chacun de ces raccords 36, les éléments longitudinaux 15 du battant de pavillon 6 correspondant sont insérés chacun dans deux manchons longitudinaux 38 en traversant de part en part le raccord 36. Par ailleurs, le tube central 35 de la traverse centrale 27 correspondante est inséré dans l'extrémité supérieur du manchon transversal 37 tandis que le tube supérieur 30 du montant 26 correspondant est inséré dans l'extrémité inférieure de ce manchon transversal 37.

Ainsi un noeud 12 de la structure maillée 9 est formé au niveau de chaque paire de manchons longitudinaux 38 de ce raccord 36.

Comme illustré par les figures 5 et 6, la structure maillée 9 comprend également :
- au niveau de la majorité des noeuds 12, des goussets 40 de soudage de l'habillage extérieur 10, et
- au niveau des parties courantes des tubes 30 et 35 et de la majorité des éléments longitudinaux 15, des goussets 41 de soudage de l'habillage extérieur 10.

Les goussets 40 sont formés, par exemple, par emboutissage de tôle et sont soudés sur les raccords 31 et 36. Ces goussets 40 présentent chacun une semelle plane d'appui 42 (figures 5 et 6) orientée vers l'extérieur de la caisse 3 et sur laquelle l'habillage extérieur 10 est soudé.

Les goussets 41 sont formés par des tôles pliées et/ou galetées soudées sur les parties courantes des éléments longitudinaux 15 et des tubes 30 et 35. Les goussets présentent chacun une semelle plane d'appui 43 orientée vers l'extérieur de la caisse 3 et sur laquelle l'habillage extérieur 10 est soudé.

Il est à noter que seuls quelques goussets 41 on été représentés sur la figure 2.

Les éléments longitudinaux 15 disposés de part et d'autre des tubes 35 des arceaux intérieurs 13 sont munis chacun, ainsi que les noeuds 12 correspondants de la structure 9, d'un gousset continu 45 de soudage sous forme d'une tôle recouvrant extérieurement l'élément longitudinal15 considéré et lesdits noeuds 12. Il est à noter que chaque gousset 45 est soudé au niveau des noeuds 12 correspondants sur les goussets 40 des raccords 36. Ces goussets 45 présentent chacun une semelle continue plane d'appui 46 orientée vers l'extérieur de la caisse 3 et sur laquelle l'habillage extérieur 10 est soudé.

L'habillage intérieur 11 est fixé, par clipsage ou enclenchement élastique sur les tubes de section circulaire de la structure maillée 9, comme illustré par la figure 5 où un organe de clipsage 50 est visible. Cet organe de clipsage 50 est porté par l'habillage intérieur 11 et fixé sur un élément longitudinal 15.

Pour réaliser le véhicule 1 de la figure 1, on peut procéder comme cela va être maintenant décrit.

On commence tout d'abord par :
- réaliser le châssis 2 de manière classique, et
- former un module de pavillon en assemblant par soudage les traverses centrales supérieures 17 des arceaux d'extrémités 14, les traverses centrales supérieures 27 des arceaux intermédiaires 13, les deux éléments longitudinaux 15 disposés de part et d'autre du pavillon 4, et les goussets 45.

Au cours de la formation de ce module de pavillon, les deux éléments longitudinaux 15 considérés sont insérés dans les manchons 38 des raccords 36 des traverses centrales supérieures 27. On fait ensuite coulisser ces traverses centrales 27 le long des deux éléments longitudinaux 15 jusqu'à leurs emplacements respectifs, puis on soude les raccords 36 sur les deux éléments longitudinaux 15.

Il est à noter que les raccords 36 des traverses centrales 17 ont été préalablement munis de leurs goussets 40.

Ensuite, on vient souder les montants 16 des arceaux d'extrémités 14 sur le châssis 2 puis souder ledit module de pavillon sur ces montants 16 par l'intermédiaire des traverses 17 des arceaux d'extrémité 14.

On vient alors insérer les autres éléments longitudinaux 15 dans les manchons 24 des arceaux d'extrémités 14, à savoir les deux éléments longitudinaux 15 restants des battants de pavillon 6 qui sont également insérés dans les manchons longitudinaux 38 inférieurs des raccords 36, et les éléments longitudinaux 15 des parois latérales 5 qui sont munis des raccords 31 qui peuvent coulisser librement le long de ceux-ci.

On soude les extrémités avants et arrières des éléments longitudinaux 15 sur les arceaux d'extrémités 14.

Ensuite, on vient insérer les tubes verticaux 30 dans les raccords 31 et 36 correspondants pour terminer les arceaux intermédiaires 13.

La possibilité de coulissement des raccords 31 le long des éléments longitudinaux 15 permet un montage aisé des tubes verticaux 30.

Une fois les tubes 30 positionnés correctement, on soude les raccords 31 sur les tubes verticaux 30 et sur les éléments longitudinaux éléments 15, ainsi que les raccords 36 sur les tubes verticaux 30 supérieurs des montants 26.

Les goussets 41 sont par la suite, soudés sur les éléments longitudinaux 15, les tubes 30 et les tubes 35, les goussets 40 ayant été préalablement soudés sur les raccords 31.

Ensuite, on vient souder l'habillage extérieur sur les semelles 42, 43 et 46 des goussets 40, 41 et 45 et sur les montants 16 des arceaux d'extrémités 14.

Enfin, l'habillage intérieur 11 est fixé sur la structure maillée 9 par clipsage.

Grâce à l'utilisation de tubes de section circulaire pour former la majorité des éléments longitudinaux et transversaux de la structure, le cintrage de ces pièces peut être réalisé de manière totalement automatisée même avec des diamètres relativement important.

L'assemblage des éléments longitudinaux et transversaux au niveau des noeuds 12 est simple et il n'est pas nécessaire de découper les éléments longitudinaux en fonction des positions des noeuds 12.

Par ailleurs, le positionnement des raccords 31 et 36 le long des éléments longitudinaux 15 peut se faire avec précision par coulissement, les sections circulaires des manchons longitudinaux des raccords 31 et 36 et des tubes 15 assurant un bon coulissement.

L'utilisation des tubes 15 et 30 de section circulaire permet également le clipsage de l'habillage intérieur 11 sur la structure maillée 9.

Ainsi, l'assemblage de la caisse 3 est simple , rapide et nécessite peu d'outils.

En outre, cette structure maillée 9 est très résistante du fait de la grande résistance mécanique des tubes de section circulaires.

Il faut également noter que la conception de la structure de caisse 3 permet son adaptation à des véhicules différents en limitant les études de conception spécifiques. En effet, le même principe de conception peut être utilisé pour des caisses différentes simplement en modifiant les paramètres de cintrage et de découpe des éléments transversaux.

En particulier, pour des caisses se distinguant uniquement par leur longueur et/ou leur nombre de fenêtres, il suffit de modifier les positions et/ou le nombre des arceaux transversaux sans que cette modification nécessite de modifier les éléments longitudinaux utilisés, comme c'est le cas avec des éléments longitudinaux sous forme de profilés en U ou en Ω qui doivent être prédécoupés aux emplacements des noeuds.

Ainsi, la structure de caisse 3 des figures 1 à 6 permet de fabriquer des véhicules ferroviaires avec des coûts et des durées relativement faibles.

Il est également à noter que les éléments longitudinaux et transversaux de la caisse sont des produits courants, que les éléments spécifiques à un modèle de caisse sont limités, et que la structure de caisse 3 peut être transportée aisément sous forme de kit puis assemblée après transport.

Dans des variantes du procédé d'assemblage, la position des raccords 31 et 36 peut être fixée avant soudage sur les éléments longitudinaux 15 par exemple à l'aide de goupilles.

La caisse décrite ne présente pas de portes latérales. Toutefois, de telles portes peuvent être aisément ménagées en disposant des encadrements au sein de la structure maillée 9. Ces encadrements peuvent être réalisés, par exemple, soit à partir de tubes de section circulaire raccordés au reste de la structure maillée 9 par des raccords constitués de manchons de section circulaire disposés en T, soit à partir de profilés de section rectangulaire munis de manchons 24 de réception d'autres tubes de la structure.

Selon une variante de l'invention, l'habillage extérieur 10 est fixé directement par collage sur les parties courantes d'au moins certains des éléments longitudinaux 15 et transversaux 30 des parois latérales 5, c'est-à-dire sans utiliser des goussets 41.

## Revendications

1. Structure de caisse (3) de véhicule ferroviaire (1) du type structure maillée (9), cette dernière comportant des éléments longitudinaux (15) et transversaux (30, 35) se rejoignant au niveau de noeuds (12), un habillage extérieur (10) et un habillage intérieur (11) supportés par la structure maillée, des éléments longitudinaux (15) et transversaux (30, 35) de la structure maillée (9) étant des tubes de sections circulaires, la structure maillée comprend, au niveau d'au moins certains de ses noeuds (12), des raccords (31, 36) de tubes longitudinaux et transversaux de sections circulaires, ces raccords (31, 36) comprenant des manchons longitudinaux (32, 38) et transversaux (33, 37) de sections circulaires qui reçoivent respectivement lesdits tubes longitudinaux (15) et transversaux (30, 35), et **caractérisée en ce que** lesdits tubes longitudinaux (15) traversent de part en part lesdits raccords (31, 36) de tubes longitudinaux et transversaux.

2. Structure de caisse selon la revendication 1, **caractérisée en ce que** la structure maillée (9) comprend des arceaux transversaux (13) formés à partir de tubes transversaux (30, 35, 37) de sections circulaires.

3. Structure de caisse selon la revendication 2, **caractérisée en ce que** lesdits arceaux transversaux (13) comprennent chacun un tube transversal (35) central de section circulaire, cintré et disposé dans une région de pavillon (4) de la caisse (3), des tubes de sections circulaires (37) cintrés plus fortement que ledit tube transversal central et prolongeant ce dernier latéralement de part et d'autre dans des régions de battants de pavillon (6) de la caisse (3), et des tubes transversaux (30) de sections circulaires prolongeant les tubes (37) des régions de battants de pavillon (6) dans des régions de parois latérales (5).

4. Structure de caisse selon la revendication 3, **caractérisée en ce que** chacun desdits arceaux transversaux (13) comprend des raccords (36) de tubes transversaux qui participent à la liaison entre le tube transversal central (35) de la région de pavillon (4) et les tubes transversaux (30) des régions de parois latérales (5), et **en ce que** ces raccords (36) de tubes transversaux comprennent des manchons transversaux (37) de sections circulaires qui reçoivent lesdits tubes transversaux (30, 35) des régions de pavillon (4) et de parois latérales (5).

5. Structure de caisse selon la revendication 4, **caractérisée en ce que** lesdits raccords (36) des arceaux transversaux (13) sont des raccords (36) de tubes transversaux et longitudinaux, et **en ce que** ces raccords (36) comprennent des manchons longitudinaux (38) de sections circulaires qui reçoivent des tubes longitudinaux (15) qui traversent de part en part lesdits raccords (36).

6. Structure de caisse selon l'une des revendications 1 à 5, **caractérisée en ce que** la structure comprend des goussets de soudage (40, 41, 45) présentant des semelles d'appui (42, 43, 46) orientées vers l'extérieur de la caisse (3) et sur lesquelles l'habillage extérieur (10) est soudé.

7. Structure de caisse selon la revendication 6 ou 7, **caractérisée en ce que** des goussets (41, 45) de soudage sont portés par des tubes longitudinaux et transversaux de sections circulaires (15, 30, 35) de la structure maillée (9).

8. Structure de caisse selon la revendication 6 ou 7, **caractérisée en ce que** des goussets de soudage (40) sont fixés sur des raccords (31, 36) de tubes longitudinaux et transversaux de sections circulaires de la stucture maillée (9).

9. Structure de caisse selon l'une quelconque des revendications 1 à 8, **caractérisée en ce que** l'habillage extérieur (10) est au moins partiellement collé sur la structure maillée (9).

10. Structure de caisse selon la revendication 9, **caractérisée en ce que** l'habillage extérieur (10) est collé directement sur des tubes longitudinaux (15) et/ou transversaux de la structure maillée (9).

11. Structure de caisse selon l'une des revendications 1 à 10, **caractérisée en ce que** l'habillage intérieur (11) est fixé par enclenchement élastique sur des tubes longitudinaux et transversaux de sections circulaires (15, 30) de ladite structure (9).

12. Véhicule ferroviaire comprenant un châssis (2) et une stucture de caisse (3) surmontant le châssis (2), **caractérisé en ce que** la structure de caisse est une structure caisse selon l'une quelconque des revendications 1 à 11.

13. Procédé d'assemblage d'une structure de caisse de véhicule ferroviaire (1) du type structure maillée (9) comportant des tubes longitudinaux (15) et transversaux (30, 35) de sections circulaires se rejoignant au niveau de noeuds (12), un habillage extérieur (10) et un habillage intérieur (11) supportés par la structure maillée, **caractérisé en ce que**, pour former ladite structure maillée (9), on insère lesdits tubes longitudinaux (15) dans les manchons longitudinaux (32, 38) de sections circulaires de raccords (31, 36) de tubes longitudinaux et transversaux, on fait coulisser ces raccords (31, 36) jusqu'à des emplacements de noeuds (12) de la structure (9), et on fixe ces raccords (32, 38) sur les tubes longitudinaux (15) au niveau de ces emplacements et ne ce que ces tubes longitudinaux (15) traversent de part en part lesdits raccords (31, 36) de tubes longitudinaux et transversaux.

14. Procédé selon la revendication 13, **caractérisé en ce que** l'on assemble des tubes transversaux (30, 35) aux manchons transversaux (33, 37) de section circulaires d'au moins certains desdits raccords (31, 36) de tubes longitudinaux et transversaux avant de fixer ces raccords auxdits emplacements de noeuds (12) de la structure maillée (9).

15. Procédé selon la revendication 13 ou 14, **caractérisé en ce qu'**on assemble des tubes transversaux (30, 35, 37) de sections circulaires pour former des arceaux transversaux (13) de la structure maillée (9).

16. Procédé selon la revendication 15, **caractérisé en ce qu'**on assemble, pour former chacun desdits arceaux transversaux (13), un tube transversal (35) central de section circulaire cintré et destiné à être disposé dans une région de pavillon (4) de la caisse, des tubes de sections circulaires (37) cintrés plus fortement que ledit tube central et destinés à être disposés dans des régions de battants de pavillon (6) de la caisse, et des tubes transversaux (30) de sections circulaires destinés à prolonger les tubes (37) des régions de battants de pavillon (6) dans des régions de parois latérales (5) de la caisse.

17. Procédé selon la revendication 16, **caractérisé en ce qu'**on relie, pour chacun desdits arceaux transversaux (13), le tube transversal central (35) de la région de pavillon et les tubes transversaux (30) des régions de parois latérales par l'intermédiaire de raccords (36) de tubes transversaux qui comprennent des manchons transversaux (37) de sections circulaires qui reçoivent lesdits tubes transversaux (30, 35) des régions de pavillon (4) et de parois latérales (5).

18. Procédé selon la revendication 17, **caractérisé en ce que** lesdits raccords (36) des arceaux transversaux (13) sont des raccords (36) de tubes transversaux et longitudinaux qui comprennent des manchons longitudinaux (38) de sections circulaires, **en ce que**, pour former ladite structure maillée (9), on insère des tubes longitudinaux (15) dans les manchons longitudinaux (38) desdits raccords (36) des arceaux transversaux (13), on fait coulisser ces raccords jusqu'à des emplacements de noeuds (12) de la structure (9), et on fixe ces raccords (36) au niveau de ces emplacements.

19. Procédé selon la revendication 18, **caractérisé en ce que** l'on assemble des tubes transversaux (30, 35) d'arceaux transversaux (13) aux manchons transversaux (37) d'au moins certains desdits raccords (36) de tubes longitudinaux et transversaux d'arceaux transversaux (13) avant de fixer ces raccords auxdits emplacements de noeuds (12) de la structure maillée (9).

20. Procédé selon l'une quelconque des revendications 13 à 19, **caractérisé en ce que** l'on fixe des goussets de soudage (40, 41, 45) sur la structure maillée (9) en orientant des semelles d'appui (42, 43, 46) de ces goussets vers l'extérieur de la caisse, puis on soude l'habillage extérieur (10) de la caisse sur lesdites semelles (42, 43, 46).

21. Procédé selon la revendication 20, **caractérisé en ce que** l'on fixe des goussets de soudage (40, 41) sur des raccords (31, 36) de tubes transversaux et longitudinaux de la structure maillée (9).

22. Procédé selon l'une quelconque des revendications 13 à 20, **caractérisé en ce que** l'on colle au moins partiellement l'habillage extérieur (10) sur la structure maillée (9).

23. Procédé selon la revendication 22, **caractérisé en ce que** l'on colle directement l'habillage extérieur sur des éléments longitudinaux (15) et/ou transversaux (30) de la structure maillée (9).

24. Procédé selon l'une quelconque des revendications 13 à 23, **caractérisé en ce que** l'on assemble l'habillage intérieur (11) sur la structure maillée (9) par enclenchement élastique sur des tubes longitudinaux et transversaux de sections circulaires (15, 30) de ladite structure.

25. Procédé d'assemblage d'un véhicule selon la revendication 12, **caractérisé en ce qu'**on assemble la structure maillée (9) de la caisse du véhicule (1) en utilisant un procédé selon l'une quelconque des revendications 13 à 24.

## Patentansprüche

1. Wagenkastenstruktur (3) eines Schienenfahrzeuges (1) in Gitterstruktur (9), wobei letztere Längselemente (15) und Querelemente (30, 35) besitzt, die im Bereich von Knotenpunkten (12) zusammenlaufen, sowie eine Außenverkleidung (10) und eine Innenverkleidung (11), die von der Gitterstruktur getragen wird, wobei es sich bei den Längselementen (15) und den Querelementen (30, 35) der Gitterstruktur (9) um Rohre mit rundem Querschnitt handelt, und die Gitterstruktur im Bereich mindestens einiger ihrer Knotenpunkte (12) längs verlaufende und quer verlaufende Rohrverbindungen (31, 36) mit rundem Querschnitt besitzt, wobei diese Verbindungen (31, 36) Längsstutzen (32, 38) und Querstutzen (33, 37) mit rundem Querschnitt aufweisen, die jeweils die längs verlaufenden Rohre (15) und quer verlaufenden Rohre (30, 35) aufnehmen, und
**dadurch gekennzeichnet, dass** die längs verlaufenden Rohre (15) die längs verlaufenden und quer verlaufenden Rohrverbindungen (31, 36) von einer Seite zur anderen durchqueren.

2. Wagenkastenstruktur nach Anspruch 1, **dadurch gekennzeichnet, dass** die Gitterstruktur (9) Querbögen (13) besitzt, die ausgehend von quer verlaufenden Rohren (30, 35, 37) mit rundem Querschnitt gebildet werden.

3. Wagenkastenstruktur nach Anspruch 2, **dadurch gekennzeichnet, dass** die Querbögen (13) jeweils ein quer verlaufendes, mittleres, gebogenes Rohr (35) mit rundem Querschnitt besitzen, das in einem Bereich des Oberteils (4) des Wagenkastens (3) angeordnet ist, Rohre mit rundem Querschnitt (37) besitzen, die stärker gebogen sind als das quer verlaufende mittlere Rohr, und die das letztere seitlich von einer Seite zur anderen in Bereichen der Flügel des Oberteils (6) des Wagenkastens (3) verlängern, und quer verlaufende Rohre (30) mit rundem Querschnitt besitzen, welche die Rohre (37) in Bereichen der Flügel des Oberteils (6) in Bereiche der Seitenwände (5) hinein verlängern.

4. Wagenkastenstruktur nach Anspruch 3, **dadurch gekennzeichnet, dass** jeder dieser Querbögen (13) quer verlaufende Rohrverbindungen (36) besitzt, die an der Verbindung zwischen dem quer verlaufenden mittleren Rohr (35) im Bereich des Oberteils (4) und den quer verlaufenden Rohren (30) der Bereiche der Seitenwände (5) beteiligt sind, und dass diese quer verlaufenden Rohrverbindungen (36) Querstutzen (37) mit rundem Querschnitt besitzen, welche die quer verlaufenden Rohre (30,35) der Bereiche des Oberteils (4) und der Seitenwände (5) aufnehmen.

5. Wagenstruktur nach Anspruch 4, **dadurch gekennzeichnet, dass** es sich bei den Verbindungen (36) der Querbögen (13) um quer verlaufende Rohrverbindungen und längs verlaufende Rohrverbindungen (36) handelt, und dass diese Verbindungen Längsstutzen (38) mit runden Querschnitten besitzen, die längs verlaufende Rohre (15) aufnehmen, welche von einer Seite zur anderen durch die Verbindungen (36) verlaufen.

6. Wagenkastenstruktur nach einem der Ansprüche 1 bis 5, **dadurch gekennzeichnet, dass** die Struktur geschweißte Knotenbleche (40, 41, 45) mit Fußplatten (42, 43, 46) besitzt, die am Wagenkasten (3) nach außen gerichtet sind, und an denen die Außenverkleidung (10) angeschweißt wird.

7. Wagenkastenstruktur nach Anspruch 6, **dadurch gekennzeichnet, dass** geschweißte Knotenbleche (41, 45) von längs verlaufenden und quer verlaufenden Rohren mit rundem Querschnitt (15, 30, 35) der Gitterstruktur (9) getragen werden.

8. Wagenkastenstruktur nach Anspruch 6 oder 7, **dadurch gekennzeichnet, dass** geschweißte Knotenbleche (40) an den längs verlaufenden und quer verlaufenden Rohrverbindungen (31, 36) mit rundem Querschnitt der Gitterstruktur befestigt werden.

9. Wagenkastenstruktur nach einem der Ansprüche 1 bis 8, **dadurch gekennzeichnet, dass** die Außenverkleidung (10) zumindest teilweise mit der Gitterstruktur (9) verklebt wird.

10. Wagenkastenstruktur nach Anspruch 9, **dadurch gekennzeichnet, dass** die Außenverkleidung (10) direkt mit den längs verlaufenden Rohren (15) bzw. quer verlaufenden Rohren der Gitterstruktur (9) verklebt wird.

11. Wagenkastenstruktur nach einem der Ansprüche 1 bis 10, **dadurch gekennzeichnet, dass** die Innenverkleidung (11) durch elastische Verriegelung an den längs verlaufenden und quer verlaufenden Rohren mit rundem Querschnitt (15, 30) der Struktur (9) befestigt wird.

12. Schienenfahrzeug mit einem Untergestell (2) und einer Wagenkastenstruktur (3), die auf dem Untergestell (2) montiert ist, **dadurch gekennzeichnet, dass** es sich bei der Wagenkastenstruktur um eine Struktur nach einem der Ansprüche 1 bis 11 handelt.

13. Verfahren zur Herstellung einer Wagenkastenstruktur eines Schienenfahrzeuges (1) mit Gitterstruktur (9), die längs verlaufende (15) und quer verlaufende (30, 35) Rohre mit rundem Querschnitt besitzt, die im Bereich von Knotenpunkten (12) zusammenlaufen, eine Außenverkleidung (10) und eine Innenverkleidung (11) besitzt, die von der Gitterstruktur getragen wird, **dadurch gekennzeichnet, dass** man zur Herstellung der Gitterstruktur (9) die längs verlaufenden Rohre (15) in die Längsstutzen (32, 38) mit rundem Querschnitt der längs verlaufenden und quer verlaufenden Rohrverbindungen (31, 36) einschiebt, diese Verbindungen (31, 36) bis zu den Stellen der Knotenpunkte (12) der Struktur (9) verschiebt, und diese Verbindungen (32, 38) an den längs verlaufenden Rohren (15) im Bereich dieser Stellen befestigt, und dass diese längs verlaufenden Rohre (15) die längs verlaufenden und quer verlaufenden Rohrverbindungen (31, 36) von einer Seite zur anderen durchqueren.

14. Verfahren nach Anspruch 13, **dadurch gekennzeichnet, dass** quer verlaufende Rohre (30, 35) mit Querstutzen (33, 37) mit rundem Querschnitt mindestens mit einigen längs verlaufenden und quer verlaufenden Rohrverbindungen (31, 36) verbunden werden, bevor diese Verbindungen an den Stellen von Knotenpunkten (12) der Gitterstruktur (9) befestigt werden.

15. Verfahren nach Anspruch 13 oder 14, **dadurch gekennzeichnet, dass** quer verlaufende Rohre (30, 35, 37) mit rundem Querschnitt verbunden werden, so dass sie Querbögen (13) der Gitterstruktur (9) bilden.

16. Verfahren nach Anspruch 15, **dadurch gekennzeichnet, dass** zur Herstellung der Querbögen (13) ein quer verlaufendes (35), gebogenes, mittleres Rohr mit rundem Querschnitt, das in einem Bereich des Oberteils oder Daches (4) des Wagenkastens angeordnet werden soll, sowie Rohre mit rundem Querschnitt (37), die stärker gebogen sind als das mittlere Rohr, und die in Bereichen der Flügel des Oberteils oder Daches (6) des Wagenkastens angeordnet werden sollen, sowie quer verlaufende (30) Rohre mit rundem Querschnitt, welche die Rohre (37) in Bereichen der Flügel des Oberteils oder Daches (6) in Bereiche der Seitenwände (5) des Wagenkastens hinein verlängern sollen, zusammengefügt werden.

17. Verfahren nach Anspruch 16, **dadurch gekennzeichnet, dass** man für jeden der Querbögen (13) das quer verlaufende mittlere Rohr (35) im Bereich des Oberteils oder Daches und die quer verlaufenden Rohre (30) in den Bereichen der Seitenwände mittels quer verlaufender Rohrverbindungen (36) verbindet, die Querstutzen (37) mit runden Querschnitten besitzen, welche die quer verlaufenden Rohre (30, 35) der Bereiche des Oberteils oder Daches (4) und der Seitenwände (5) aufnehmen.

18. Verfahren nach Anspruch 17, **dadurch gekennzeichnet, dass** es sich bei den Verbindungen (36) der Querbögen (13) um quer verlaufende und längs verlaufende Rohrverbindungen (36) handelt, die Längsstutzen (38) mit rundem Querschnitt besitzen, und dass man zur Herstellung der Gitterstruktur (9) längs verlaufende Rohre (15) in die Längsstutzen (38) der Verbindungen (36) der Querbögen (13) einschiebt, diese Verbindungen bis zu den Stellen der Knotenpunkte (12) der Struktur (9) verschiebt bzw. gleiten lässt, und diese Verbindungen (36) im Bereich dieser Stellen befestigt.

19. Verfahren nach Anspruch 18, **dadurch gekennzeichnet, dass** quer verlaufende Rohre (30, 35) der Querbögen (13) mit Querstutzen (37) mindestens einiger der längs verlaufenden und quer verlaufenden Rohrverbindungen der Querbögen (13) verbunden werden, bevor diese Verbindungen an den Stellen der Knotenpunkte (12) der Gitterstruktur (9) befestigt werden.

20. Verfahren nach einem der Ansprüche 13 bis 19, **dadurch gekennzeichnet, dass** geschweißte Knotenbleche (40, 41,45) an der Gitterstruktur (9) befestigt werden, indem Fußplatten (42, 43, 46) dieser Knotenbleche am Wagenkasten nach außen gerichtet werden, und anschließend die Außenverkleidung (10) des Wagenkastens mit den Fußplatten (42, 43, 46) verschweißt wird.

21. Verfahren nach Anspruch 20, **dadurch gekennzeichnet, dass** geschweißte Knotenbleche (40, 41) an den quer verlaufenden und längs verlaufenden Rohrverbindungen (31, 36) der Gitterstruktur (9) befestigt werden.

22. Verfahren nach einem der Ansprüche 13 bis 20, **dadurch gekennzeichnet, dass** die Außenverkleidung (10) zumindest teilweise mit der Gitterstruktur (9) verklebt wird.

23. Verfahren nach Anspruch 22, **dadurch gekennzeichnet, dass** die Außenverkleidung direkt mit den Längselementen (15) bzw. Querelementen (30) der Gitterstruktur (9) verklebt wird.

24. Verfahren nach einem der Ansprüche 13 bis 23, **dadurch gekennzeichnet, dass** die Innenverkleidung (11) mit der Gitterstruktur (9) durch elastische Verriegelung an den längs verlaufenden und quer verlaufenden Rohren mit rundem Querschnitt (15, 30) der Struktur verbunden wird.

25. Verfahren zur Herstellung eines Fahrzeugs nach Anspruch 12, **dadurch gekennzeichnet, dass** die Gitterstruktur (9) des Wagenkastens des Fahrzeugs (1) mit Hilfe eines Verfahrens nach einem der Ansprüche 13 bis 24 hergestellt wird.

## Claims

1. A rail vehicle body structure (3) of the grid structure (9) type, said grid structure having longitudinal elements (15) and cross elements (30, 35) interconnected at nodes (12), and supporting outer and inner coverings (10, 11), the longitudinal and cross elements (15; 30, 35) of the grid structure (9) being circular section tubes, the grid structure comprises, at at least some of its nodes (12), connections (31, 36) for interconnecting longitudinal and cross tubes of circular section, these connections (31, 36) having longitudinal and cross sleeves (32, 38; 33, 37) of circular section which receive said longitudinal and cross tubes (15; 30, 35) respectively, the body structure being **characterized in that** said longitudinal tubes (15) pass right through said connections (31, 36) made up of longitudinal and cross tubes.

2. A body structure according to claim 1, **characterized in that** the grid structure (9) comprises cross hoops (13) made up of cross tubes (30, 35, 37) of circular section.

3. A body structure according to claim 2, **characterized in that** each of said cross hoops (13) comprises a curved central cross tube (35) of circular section located in a roof region of the body (3), circular section tubes (37) curved more tightly than said central cross tube and extending it sideways at each of its ends in cant-rail regions of the body (3), and circular section cross tubes (30) extending the tubes (37) of the cant-rail regions in the side wall regions.

4. A body structure according to claim 3, **characterized in that** each of said cross hoops (13) has cross tube connections (36) which participate in connecting the central cross tube (35) of the roof region to the cross tubes (30) of the side wall regions, and **in that** the cross tube connections (36) comprise circular section cross sleeves (37) which receive said cross tubes (30, 35) of the roof region and of the side wall regions.

5. A body structure according to claim 4, **characterized in that** said connections (36) of the cross hoops (13) are connections (36) for interconnecting cross and longitudinal tubes, and **in that** these connections (36) comprise longitudinal sleeves (38) of circular section which receive longitudinal tubes (15) that pass right through said connections (36).

6. A body structure according to any one of claims 1 to 5, **characterized in that** the structure comprises welding gussets (40, 41, 45) presenting bearing soleplates (42, 43, 46) towards the outside of the body (3) and on which the outer covering (10) is welded.

7. A body structure according to claim 6, **characterized in that** welding gussets (41, 45) are carried by circular section longitudinal and cross tubes (15, 30, 35) of the grid structure (9).

8. A body structure according to claim 6 or 7, **characterized in that** welding gussets (40) are fixed to circular section longitudinal and cross tube connections (31, 36) of the grid structure (9).

9. A body structure according to any one of claims 1 to 8, **characterized in that** the outer covering (10) is connected to the grid structure (9) at least in part by adhesive.

10. A body structure according to claim 9, **characterized in that** the outer covering (10) is stuck directly to longitudinal tubes (15) and/or cross tubes of the grid structure (9).

11. A body structure according to any one of claims 1 to 10, **characterized in that** the outer covering (11) is fixed to circular section longitudinal and cross tubes (15, 30) of said structure (9) by resilient engagement.

12. A rail vehicle comprising a frame (2) and a body structure (3) on the frame (2), the vehicle being **characterized in that** the body structure is a structure according to any one of claims 1 to 11.

13. A method of assembling a rail vehicle body structure of the grid structure (9) type, having longitudinal tubes (15) and cross tubes (30, 35) of circular section interconnected at nodes (12), and supporting outer and inner coverings (10, 11), the method being **characterized in that** to form said grid structure (9), said longitudinal tubes (15) are inserted in the circular section longitudinal sleeves (32, 38) of connections (31, 36) for interconnecting longitudinal and cross tubes, said connections (31, 36) are slid to the locations of the nodes (12) of the structure (9), and said connections (31, 36) are fixed to the longitudinal tubes (15) at said locations, and **in that** said longitudinal tubes (15) pass right through said connections (31, 36) made up of longitudinal and cross tubes.

14. A method according to claim 13, **characterized in that** cross tubes (30, 35) are assembled to the circular section cross sleeves (33, 37) of at least some of said connections (31, 36) for interconnecting longitudinal and cross tubes prior to said connections being fixed at said locations of the nodes (12) of the grid structure (9).

15. A method according to claim 13 or 14, **characterized in that** circular section cross tubes (30, 35, 37) are assembled together to form cross hoops (13) of the grid structure (9).

16. A method according to claim 15, **characterized in that** to form each of said cross hoops (13), a curved circular section central cross tube (35) for placing in a roof region of the body is assembled to circular section tubes (37) that are curved more tightly than said central tube and that are designed to occupy cant-rail regions of the body, and to circular section cross tubes (30) for extending the tubes (37) of the cant-rail regions into the side wall regions of the body.

17. A method according to claim 16, **characterized in that**, for each of said cross hoops (13), the central cross tube (35) of the roof region is connected to the cross tubes (30) of the side wall regions via cross tube connections (36) which have circular section cross sleeves (37) that receive said cross tubes (30, 35) of the roof region and of the side regions.

18. A method according to claim 17, **characterized in that** said cross hoop connections (36) are connections (36) for interconnecting cross and longitudinal tubes and have longitudinal sleeves (38) of circular section, and **in that** in order to form said grid structure (9) longitudinal tubes (15) are inserted in the longitudinal sleeves (38) of said cross hoop connections (31 ), these connections are slid to the locations of the nodes (12) of the structure (9), and these connections (36) are fixed at said locations.

19. A method according to claim 18, **characterized in that** cross tubes (30, 35) of cross hoops (13) are assembled to the cross sleeves (37) of at least some of said connections (36) for interconnecting longitudinal and cross tubes of the cross hoops (13) before said connections are fixed at said locations of the nodes (12) of the grid structure (9).

20. A method according to any one of claims 13 to 19, **characterized in that** welding gussets (40, 41, 45) are fixed to the grid structure (9) with bearing soleplates (42, 43, 46) of said gussets being directed towards the outside of the body, and then the outer covering (10) of the body is welded to said soleplates (42, 43, 46).

21. A method according to claim 20, **characterized in that** welding gussets (40, 41) are fixed to the cross and longitudinal tube connections (31, 36) of the grid structure (9).

22. A method according to any one of claims 13 to 20, **characterized in that** the outer covering (10) is secured to the grid structure (9) at least in part by means of adhesive.

23. A method according to claim 22, **characterized in that** the outer covering is stuck directly to longitudinal and/or cross elements (15, 30) of the grid structure (9).

24. A method according to any one of claims 13 to 23, **characterized in that** the inner covering (11) is assembled to the grid structure (9) by resilient engagement on circular section longitudinal and cross tubes (15, 30) of said structure.

25. A method of assembling a vehicle according to claim 12, **characterized in that** the grid structure (9) of the body of the vehicle (1) is assembled by using a method according to any one of claims 13 to 24.
